Europäisches Patentamt

European Patent Office

Office européen des brevets

(19)

(11) Veröffentlichungsnummer: **0 234 296**
A1

(12) **EUROPÄISCHE PATENTANMELDUNG**

(21) Anmeldenummer: 87101002.1

(22) Anmeldetag: 24.01.87

(51) Int. Cl.³: **A 23 P 1/00**
**A 23 B 7/02, A 23 B 7/08**

(30) Priorität: **27.01.86 CH 301/86**

(43) Veröffentlichungstag der Anmeldung:
**02.09.87 Patentblatt 87/36**

(84) Benannte Vertragsstaaten:
**AT BE CH DE ES FR GB IT LI LU NL SE**

(71) Anmelder: **Jacobs Suchard AG**
**Klausstrasse 4/6**
**CH-8034 Zürich(CH)**

(72) Erfinder: **Giddey, Claude**
**59, Route de Chêne**
**CH-1208 Genève(CH)**

(72) Erfinder: **Dové, Georges**
**1, Quai du Cheval Blanc**
**CH-1227 Carouge(CH)**

(74) Vertreter: **Bolte, Erich, Dipl.-Ing. et al,**
**c/o Meissner, Bolte & Partner Patentanwälte Hollerallee 73**
**D-2800 Bremen 1(DE)**

(54) Verfahren zur Rehydratation von lyophilisierten Früchten.

(57) Nach dem erfindungsgemäßen Verfahren werden frische lyophilisierte Früchte mit einer wäßrigen Kohlenhydratlösung, deren Wasseraktivität in der Größenordnung von 0,75 liegt, rehydratisiert. Das für diese Rehydratation verwendete Lösungsvolumen ist vorzugsweise etwa gleich der Absorptionskapazität der lyophilisierten Frucht.

EP 0 234 296 A1

Croydon Printing Company Ltd.

# MEISSNER, BOLTE & PARTNER

Patentanwälte · European Patent Attorneys*

Bremen · München

**0234296**

Anmelderin:

Jacobs Suchard AG
Klausstraße 4-6

CH - 8034 Zürich

Hans Meissner · Dipl.-Ing. (bis 1980)
Erich Bolte · Dipl.-Ing.*
Friedrich Möller · Dipl.-Ing.

BÜRO MÜNCHEN/MUNICH OFFICE:
Dr. Eugen Popp · Dipl.-Wirtsch.-Ing.*
Wolf E. Sajda · Dipl.-Phys.*
Dr. Johannes Bohnenberger · Dipl.-Ing.
Dr. Claus Reinländer · Dipl.-Ing.*

ANSCHRIFT/ADDRESS:
Hollerallee 73
D-2800 Bremen 1

Telefon: (04 21) 34 20 19
Telex: 246157 meibo d
Telefax: (04 21) 34 22 96

| Ihr Zeichen<br>Your ref. | Unser Zeichen<br>Our ref. | JAC-283 | Datum<br>Date | 19. Jan. 1987 |
|---|---|---|---|---|

## Verfahren zur Rehydratation von lyophilisierten Früchten

### B e s c h r e i b u n g :

Die vorliegende Erfindung betrifft ein Verfahren zur Rehydratation von frischen lyophilisierten Früchten.

Man sagt, daß sich eine lyophilisierte Frucht verhält wie ein Schwamm im Moment seiner Rehydratation. Allerdings spielen das Pectin und die anderen Bestandteile der Zellmembranen nicht mehr ihre Rolle, die darin besteht, diesen Membranen die Eigenschaften der Semi-Permeabilität zu verleihen. Eine derart entwässerte Frucht, die nicht erhitzt wurde, kommt - einmal rehydratisiert - geschmacklich und in ihrer äußeren Form der frischen Frucht sehr nahe. Allerdings muß eine solche Frucht dann unverzüglich verzehrt werden. Bei der Lyophilisation werden Bakterien, Hefen, Schimmel und Enzyme (Pektinasen, Phenoloxidasen usw.) nicht zerstört und nehmen bei der Rehydratation ihre normale Aktivität wieder auf und verhindern die Aufbewahrung der Frucht, so als handele es sich um eine frische Frucht.

Es ist bekannt, daß, wenn die Wasseraktivität ($a_w$) unter bestimmte Werte gesunken ist, die Bakterien, Hefen, Schimmel und die Enzyme ihre biologischen Eigenschaften verlieren. Die Grenzen für die Wasseraktivität liegen in der Größenordnung von 0,90 für die Bakterien, bei 0,80 für die Hefen, bei 0,70 für Schimmel und bei 0,50 für die Enzyme; aber es ist praktisch unmöglich, eine wäßrige Kohlenhydratlösung zu finden, deren Wasseraktivität all diesen Bedingungen genügt. Ohne Zweifel liegt ein Grund dafür, daß man nicht versucht hat, Früchte mit einer Kohlenhydratlösung zu rehydratisieren, darin, daß in der Praxis eine Lösung mit einer Wasseraktivität, die geeignet ist, selbst inerte Enzyme zu reaktivieren, nicht realisierbar ist.

Die Aktivität von $a_w$ = 0,7 würde bereits, berechnet auf der Basis von Fructose (PM = 180) eine theoretische Konzentration an Trockenmasse von 81 % (Gewichtsprozent) fordern. Diese Konzentration wäre aus Gründen der Löslichkeit des Zuckers nicht realistisch, außer unter Erhitzen des Sirups.

Gegenwärtig wird die Mehrzahl der frischen Früchte, insbesondere der roten Früchte, zur Zeit der Ernte verzehrt. Die einzige Konservierung von unbegrenzter Dauer ohne Erhitzen ist das Gefrieren, zum Beispiel zum Zweck der Beimischung von Früchten in Joghurts oder zur Verwendung in der Konfiserie und zur Aromatisierung von Speiseeis. Im Fall von Joghurts und Speiseeis werden die aufgetauten Früchte gezuckert und auf ungefähr 80°C erhitzt, anschließend ohne kontrollierte Atmosphäre

($N_2$) während einer begrenzten Dauer zwei bis drei Wochen) bei einer Temperatur, die unter der Umgebungstemperatur liegt, aufbewahrt. Für die Konfiserie werden Früchte gekocht, und ihre Konservierung ist aufgrund der thermischen Zerstörung von Bakterien, Hefen, Schimmel und Enzymen möglich. Im Gegensatz dazu gibt es keine Möglichkeit für Beimischung frischer Früchte in Konfekt oder zur Herstellung anderer Produkte, die noch mehrere Monate nach ihrer Herstellung verzehrt und bei Raumtemperatur aufbewahrt werden können.

Ziel der vorliegenden Erfindung ist es, eine Lösung für dieses Problem bereitzustellen. Es wird jedoch ausdrücklich darauf hingewiesen, daß die Verwendung solcher Früchte nicht auf die Konfiserie beschränkt ist; wie auch aus der folgenden Beschreibung hervorgeht.

Gegenstand der Erfindung ist daher ein Verfahren zur Rehydratation von lyophilisierten Früchten gemäß Anspruch 1.

In Kenntnis des oben Gesagten und in Anbetracht der Entwicklung von Bakterien, Hefen, Schimmel und der enzymatischen Aktivität in Abhängigkeit von der Wasseraktivität hat man mit großem Erstaunen festgestellt, daß lyophilisierte Früchte, die dann teilweise mit Kohlenhydratlösungen, deren Wasseraktivität unter 0,8 lag, rehydratisiert wurden, wieder die Entwicklung von Bakterien und von Hefen nicht zulassen, was bei diesem Wert der Wasseraktivität normal ist, aber die noch nicht einmal die Entwicklung von Schimmel, noch die Entwicklung der enzymatischen Aktivität zulassen, obwohl die Wasseraktivität der rehydratisierten Früchte relativ hoch ist.

Im Falle der Enzyme, die aus einer Proteinkette mit einer spezifischen räumlichen Konformation bestehen, kann man sich vorstellen, daß nach der Lyophilisation die Rehydratation nicht so vor sich geht, wie unter den Anfangsbedingungen, was erklären würde, daß trotz der Aktivität von 0,8 die Enzyme gehemmt sind, obwohl die normale Grenze bei etwa 0,5 liegt. Was Schimmel angeht, so kann man annehmen, daß die Hysterese Absorption/Desorption zugunsten ihrer Hemmung arbeitet.

Da der Vorgang der Lyophilisation wohl bekannt ist, beschreiben die folgenden Beispiele diesen Schritt nicht. Man kann einfach angeben, daß im Fall der längeren Lagerung von lyophilisierten Früchten diese in einer Stickstoff-Atmosphäre vor ihrer Rehydratation vor Sauerstoff geschützt werden müssen, um ihr ursprüngliches Aroma zu schützen. Vor ihrer Rehydratation kann dann ein Vakuum angelegt werden.

Wir werden nachstehend mehrere Beispiele angeben, in denen verschiedene Sirup-Zusammensetzungen benutzt werden, in denen die Wasseraktivität $a_w$ um 0,75 liegt und die dazu dienen, verschiedene Sorten von frischen lyophilisierten Früchten zu rehydratisieren.

Die im Rahmen der Erfindung benutzten Kohlenhydratlösungen enthalten vorzugsweise Kohlenhydrate mit niedrigem Molekulargewicht oder deren Derivate; das bedeutet, daß $C_5$- und $C_6$-Monosaccharide empfohlen werden, ohne deshalb die eventuelle Zugabe von Disacchariden auszuschließen.

Aus der Reihe der eingesetzten Zucker werden folgende als Beispiele aufgeführt: Glucose, Fructose, Xylose, Mannose, Galactose, Ribose, Maltose, Saccharose, Lactose sowie die von derartigen Zuckern abgeleiteten Polyalkohole, wie z.B. Sorbit, Mannit, Xylit, Maltitol, Propylenglykol, Glycerin.

Die Wasserkonzentration der Kohlenhydratlösungen wird entsprechend der gewünschten Aktivität gewählt; im allgemeinen liegt die Konzentration bei etwa 25 - 30 %; sie variiert jedoch berechenbar von einem Zucker zum anderen entsprechend dem Molekulargewicht und dem Vermögen, Wasser zu binden.

Beispiel 1:

Man stellt eine Lösung aus 960,4 g Fructose-Sirup mit 70 % Trockenmasse - deren Zusammensetzung weiter unten angegeben wird - 28,24 g bidestilliertem Wasser und 10,36 g Zitronensäure . $1H_2O$ her. Diese Lösung hat einen pH-Wert von 2,35, eine Konzentration Brix 68,2 und enthält etwa 31,64 % Wasser.

Man fügt zu dieser Lösung 170,42 g lyophilisierte Himbeeren (14,56 %), zerkleinert in Stücken von 5 bis 6 mm. Die Dauer der Rehydratation beträgt etwa 12 h. Der pH-Wert nach der Rehydratation ist 2,8. Der Endwassergehalt liegt ungefähr bei 27,03 %.

Die so rehydratisierten Früchte sind zur Verwendung in der Konfiserie bestimmt, insbesondere als Füllmasse für Schokoladebonbons. Man kann feststellen, daß das verwendete Sirup-Volumen etwa der Absoptions-Kapazität der lyopohilisierten Früchte entspricht, so daß das Aroma dieser Früchte nicht im überschüssigen Sirup verteilt ist. Die so rehydratisierten Früchte wurden dann sechs Monate und mehr bei Umgebungstemperatur und -atmosphäre aufbewahrt, ohne daß ein Verderben feststellbar war.

Der in diesem Beispiel benutzte Fructose-Sirup hat eine Konzentration Brix (20° C) von etwa 68,0 bis 69,0; 69,5 bis 70,5 % an Trockenextrakt, einem Gesamtzuckergehalt in der Trockenmasse von mindestens 99,5 %. Diese Zusammensetzung enthält 95 % Fructose, 3,5 % Dextrose, 1,5 % Oligosaccharide, DE 99 %, pH 3,0; sie hat eine relative Süßkraft von 120 bis 160 (Saccharose = 100) und eine maximale Viskosität bei 20° C von 152 mPl, bei 25° C von 107 mPl.

Beispiel 2:

Man stellt eine Lösung aus 680 g Glucosesirup mit 80 % Trockenmasse - deren Zusammensetzung weiter unten angegeben wird - 140 g bidestilliertem Wasser, 8,60 g Zitronensäure . $H_2O$ und 0,83 g Ascorbinsäure her. Diese Lösung hat eine pH-Wert von 2,30, eine Konzentration Brix 68,0 und enthält ungefähr 31,64 % Wasser.

Man fügt zu dieser Lösung 110 g (11,7 %) lyophilisierte Erdbeeren, die in Stücken von 5 bis 6 mm vorliegen, und läßt den Sirup etwa 12 h einwirken. Der pH-Wert nach der Rehydratation beträgt 2,5 und der Endgehalt an Wasser liegt bei etwa 27,93 %.

Die Verwendung dieser rehydratisierten Früchte ist die gleiche wie in Beispiel 1, Die festgestellten Charakteristika der Konservierung sind ebenfalls die gleichen.

Die Zusammensetzung des eingesetzten Glucosesirups enthält 80 % Trockenmasse, 42 % Äquivalenz an Dextrose, 14 % Maltose, 11,8 % Trisaccharide, 52,2 % Polysaccharide.

Beispiel 3:

Es wird eine Lösung aus 960,4 g Isoglucose - deren Zusammensetzung weiter unten angegeben wird - 28,24 g bidestilliertem Wasser, 10,36 g Zitronensäure . $1H_2O$

und 1,0 g Ascorbinsäure hergestellt. Diese Lösung hat einen pH-Wert von 2,4, eine Konzentration Brix 63,3 und enthält ca. 31,64 % Wasser.

Zu dieser Lösung wurden 154,7 g lyophilisierte ganze Johannisbeeren (13,4 %) gegeben. Die Dauer der Rehydratation beträgt ungefähr 15 h. Der pH-Wert nach der Rehydratration ist 2,7, und der Endwassergehalt ist ungefähr 27,4 %.

Die Verwendung der rehydratisierten Früchte ist die gleiche wie in den vorangehenden Beispielen.

Der Isoglucose-Sirup enthält 70,5 bis 71,5 % Trockenmasse. Der Gesamtzuckergehalt liegt bei maximal 99,95 % und setzt sich zusammen aus mindestens 42 % Fructose, maximal 51 % Dextrose, 4,5 % Maltose, 1 % Triose und 1,5 % höheren Zuckern. DE 93-96, die Konzentration Brix bei 20°C beträgt etwa 69,2 bis 70,1, der pH-Wert 3,8 bis 4,5, die relative Süßkraft bei 15 %iger Konzentration beträgt 100 und die Viskosität bei 27°C 150 mPl.

Beispiel 4:

Es wird eine Lösung bereitet, die ein Gemisch Saccharose/Glucose 56,09 % : 11,22 %, d.h. 533,6 g Saccharose, 133,4 g Glucosesirup mit 80 % Trockenmasse gemäß Beispiel 2, sowie 273,47 g bidestilliertes Wasser, 9,85 g Zitronensäure . 1$H_2$O und 0,95 g Ascorbinsäure enthält. Der pH-Wert dieser Lösung beträgt 2,38, es liegt eine Konzentration Brix 68,1 vor, und der Wassergehalt liegt bei etwa 31,55 %.

Zu dieser Lösung gibt man 130 g lyophilisierte ganze Heidelbeeren (12 %). Die Dauer der Rehydratation beträgt etwa 15 h. Der End-Wassergehalt ist 27,76 %.

-8-

Dieses Produkt ist ebenfalls als Füllmasse für Schokoladenkonfekt zu verwenden.


Beispiel :5

Man bereitet eine Lösung aus Fructose/Isoglucose (50 : 50)-Sirup "ISOSWEET" von Amylum (51 % Dextrose/42 % Fructose), d. h. 480,2 g Fructosesirup mit 70 % Trockenmasse gemäß Beispiel 1, 480,2 g Isoglucosesirup mit 70 % Trockenmasse gemäß Beispiel 3, sowie 28,24 g bidestilliertem Wasser, 10,36 g Zitronensäure . $1H_2O$ und 1,0 g Ascorbinsäure. Diese Lösung hat einen pH-Wert von 2,35 und eine Konzentration Brix 68,3 und einen Wassergehalt von etwa 31,64 %.

Man fügt zu dieser Lösung 132,62 g lyophilisierte Erdbeeren (11,7 %) in Form von Stücken der Größe 5 bis 6 mm. Die Rehydratationsdauer liegt bei 12 h. Der pH-Wert nach der Rehydratation ist 2,65. Der End-Wassergehalt liegt bei etwa 27,94 %.


Beispiel 6:

Man stellt eine Lösung aus einem Gemisch (50 : 50) von Fructose-Sirup und Sorbit-Sirup, d.h. 480,2 g Fructose-Sirup mit 70 % Trockenmasse gemäß Beispiel 1, 480,2 g Sorbit-Sirup mit 70 % Trockenmasse nach einer Zusammensetzung, die weiter unten angegeben wird, sowie 28,24 g bidestilliertem Wasser, 10,36 g Zitronensäure . $1H_2O$ und 1 g Ascorbinsäure her. Diese Lösung hat einen pH-Wert von 2,4, eine Konzentration Brix 68,2 und einen Wassergehalt von etwa 31,64 %.

Zu dieser Lösung werden 170 g lyphilisierte ganze schwarze Johannisbeeren (14,53 %) gegeben. Die Dauer der Rehydratation beträgt etwa 15 h. Der pH-Wert nach der Rehydratation ist 2,75, und der End-Wassergehalt ist etwa 27,04 %.

Beispiel 7:

Man bereitet die gleiche Lösung wie in Beispiel 6, allerdings mit 960 g purem Sorbit-Sirup ohne Fructose-Sirup, die anderen Mengen bleiben die gleichen.

Beispiel 8:

Es wird eine Lösung mit einem schwer aufnehmbaren Kohlenhydrat hergestellt, um eine rehydratisierte Frucht mit niedrigem Kaloriengehalt zu erhalten. Man geht von 960,4 g Maltitol-Sirup mit 70 % Trockenmasse aus - dieser Sirup ist im Handel unter dem geschützten Namen "Malbit" zu erwerben -, gibt 28,24 g bidestilliertes Wasser und 10,36 g Zitronensäure . $1H_2O$ zu.

Die Verwendung der erfindungsgemäß rehydratisierten Früchte ist offensichtlich nicht auf die Konfiserie beschränkt. Man könnte sich zum Beispiel vorstellen, diese Früchte zur Herstellung einer Art Konfitüre mit dem Geschmack frischer Früchte zu verarbeiten. Man kann außerdem ins Auge fassen, die nach diesem Verfahren rehydratisierten Früchte zur Herstellung von Sirupen zu verwenden. In diesem Fall kann das Fruchtaroma verstärkt werden, indem man nach der Rehydratation das Fruchtfleisch von der Flüssigkeit abtrennt, diese Flüssigkeit zur Rehydratation anderer Früchte verwendet wird, so daß der so hergestellte Sirup ein verstärktes Aroma aufweist. Dieses Verfahren kann wiederholt werden bis ein Sirup vorliegt, der die gewünschte Aromakonzentration hat. Dieser Sirup kann nach starker Verdünnung

-10-

mit Wasser als Getränk genossen werden.

Es wird darüber hinaus vorstellbar, mit diesen rehydratisierten Früchten das Dekorieren von Kuchen oder Speiseeis vorzunehmen. Man kann daraus ebenfalls ein Frücht-Mousse mit langer Haltbarkeit herstellen.

Meissner, Bolte & Partner

# MEISSNER, BOLTE & PARTNER

Patentanwälte · European Patent Attorneys*
Bremen · München

**0234296**

Hans Meissner · Dipl.-Ing. (bis 1980)
Erich Bolte · Dipl.-Ing.*
Friedrich Möller · Dipl.-Ing.

BÜRO MÜNCHEN/MUNICH OFFICE:
Dr. Eugen Popp · Dipl.-Wirtsch.-Ing.*
Wolf E. Sajda · Dipl.-Phys.*
Dr. Johannes Bohnenberger · Dipl.-Ing.
Dr. Claus Reinländer · Dipl.-Ing.*

ANSCHRIFT/ADDRESS:          Telefon: (0421) 342019
Hollerallee 73             Telex: 246157 meibo d
D-2800 Bremen 1            Telefax: (0421) 342296

**Anmelderin:**

Jacobs Suchard AG
Klausstraße 4-6

CH - 8034 Zürich

| Ihr Zeichen Your ref. | Unser Zeichen Our ref. | JAC-283 | Datum Date | 19. Jan. 1987 |
|---|---|---|---|---|

---

## Verfahren zur Rehydratation von lyophilisierten Früchten

---

P a t e n t a n s p r ü c h e :

1. Verfahren zur Rehydratation von frischen lyophilisierten Früchten, d a d u r c h   g e k e n n z e i c h n e t , daß sie mit einer wäßrigen Kohlenhydratlösung, deren Wasseraktivität $a_w$ kleiner als 0,8 ist, rehydratisiert werden.

2. Verfahren nach Anspruch 1, dadurch gekennzeichnet, daß ein Volumen der Kohlenhydratlösung eingesetzt wird, das der Absorptionskapazität der lyophilisierten Früchte ungefähr gleich ist.

3. Verfahren nach Anspruch 1, dadurch gekennzeichnet, daß die Wasseraktivität der Kohlenhydratlösung zwischen 0,65 und 0,80 liegt.

4. Verfahren nach Anspruch 1, dadurch gekennzeichnet, daß die Früchte nach der Lyophilisation in Stickstoffatmosphäre gebracht werden und daß dann vor der Rehydratation eine Evakuierung erfolgt.

5. Verfahren nach Anspruch 1, dadurch gekennzeichnet, daß nach der Rehydratation der frischen lyophilisierten Frucht die Flüssigkeit vom Fruchtfleisch abgetrennt wird und diese Flüssigkeit als Rehydratations-Sirup für neue frisch lyophilisierte Früchte benutzt wird, woraufhin erneut die Flüssigkeit vom Fruchtfleisch abgetrennt wird, und daß dieser Vorgang wiederholt wird, bis die derart extrahierte Flüssigkeit die gewünschte Aroma-Konzentration aufweist.

Meissner, Bolte & Partner

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CONFECTIONERY PRODUCTION, Band 38, Nr. 12, Dezember 1972, Seiten 633,634,671, Surbiton, Surrey, GB; R. LEES: "Desiccated coconut and its use in sugar confectionery manufacture" * Seite 633, Spalte 2; Seite 634, Spalte 1, Zeilen 1-21 * | 1,2 | A 23 P 1/00 A 23 B 7/02 A 23 B 7/08 |
| | --- | | |
| X | FOOD TECHNOLOGY, Band 20, Nr. 10, Oktober 1966, Seiten 105-108, Chicago, Illinois, US; R.L. LABELLE et al.: "Dehydrofreezing red tart cherries" * Seite 106, Spalte 3; Seite 106, Tabelle I * | 1,2 | |
| | --- | | **RECHERCHIERTE SACHGEBIETE (Int. Cl.4)** |
| Y | FR-A-1 585 399 (R. BOUSSER et al.) * Seite 4, Zeilen 1-8; Seite 6, Zeilen 22-29 * | 1,2 | A 23 P A 23 B A 23 G |
| | --- | | |
| X | US-A-3 219 461 (F.G. LAMB) * Beispiele 1,2,5; Anspruch 1 * | 1,2 | |
| | --- | | |
| Y | US-A-3 554 766 (P.H. ENGEL et al.) * Figur 1; Anspruch 1; Beispiele 1,4; Spalte 6, Zeilen 27-43 * | 1,2 | |
| | --- -/- | | |

Der vorliegende Recherchenbericht wurde für alle Patentansprüche erstellt.

| Recherchenort DEN HAAG | Abschlußdatum der Recherche 27-05-1987 | Prüfer GUYON R.H. |
|---|---|---|

## EUROPÄISCHER RECHERCHENBERICHT

### EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 952 112 (C.V. FULGER et al.) | | |
| A | GB-A-1 228 175 (UNILEVER) | | |
| A | US-A-4 103 035 (C.V. FULGER et al.) | | |
| A | FR-A-1 566 444 (W.R. GRACE & CO.) | | |
| A | CH-A- 433 936 (A.L. DUFOUR) | | |
| A | FR-A-1 482 800 (W.R. GRACE & CO.) | | RECHERCHIERTE SACHGEBIETE (Int. Cl.4) |
| A | US-A-3 102 820 (S. BARTON et al.) | | |

Der vorliegende Recherchenbericht wurde für alle Patentansprüche erstellt.

| Recherchenort DEN HAAG | Abschlußdatum der Recherche 27-05-1987 | Prüfer GUYON R.H. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82